(19) Europäisches Patentamt
European Patent Office
Office européen des brevets

(11) **EP 4 290 449 B1**

(12) **FASCICULE DE BREVET EUROPEEN**

(45) Date de publication et mention de la délivrance du brevet:
**04.02.2026 Bulletin 2026/06**

(21) Numéro de dépôt: **23176983.7**

(22) Date de dépôt: **02.06.2023**

(51) Classification Internationale des Brevets (IPC):
**G06T 3/4046** (2024.01)    **G06T 3/4053** (2024.01)
**G06T 5/50** (2006.01)    **G06T 5/60** (2024.01)

(52) Classification Coopérative des Brevets (CPC):
**G06T 5/50; G06T 3/4046; G06T 3/4053; G06T 5/60;**
G06T 2207/10056; G06T 2207/20081;
G06T 2207/20084; G06T 2207/20221

(54) **TRAITEMENT D'IMAGES DE MICROSCOPIE PAR INTELLIGENCE ARTIFICIELLE**

VERARBEITUNG VON MIKROSKOPIEBILDERN MIT KÜNSTLICHER INTELLIGENZ

PROCESSING MICROSCOPY IMAGES USING ARTIFICIAL INTELLIGENCE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **06.06.2022 FR 2205407**

(43) Date de publication de la demande:
**13.12.2023 Bulletin 2023/50**

(73) Titulaires:
• **Institut Mines Telecom**
  **91011 Evry-Courcouronnes (FR)**
• **T-life**
  **75004 Paris (FR)**

(72) Inventeurs:
• **BOUCHAMA, Lyes**
  **78150 LE CHESNAY (FR)**
• **GOTTESMAN, Yaneck**
  **92370 CHAVILLE (FR)**
• **DORIZZI, Bernadette**
  **75015 PARIS (FR)**
• **KLOSSA, Jacques**
  **92200 NEUILLY-SUR-SEINE (FR)**

(74) Mandataire: **IPAZ**
  **16, rue Gaillon**
  **75002 Paris (FR)**

(56) Documents cités:
• **ZHANG JINLEI ET AL: "The integration of neural network and physical reconstruction model for Fourier ptychographic microscopy", OPTICS COMMUNICATIONS, ELSEVIER, AMSTERDAM, NL, vol. 504, 22 September 2021 (2021-09-22), XP086843721, ISSN: 0030-4018, [retrieved on 20210922], DOI: 10.1016/J.OPTCOM.2021.127470**
• **KAPPELER ARMIN ET AL: "Ptychnet: CNN based fourier ptychography", 2017 IEEE INTERNATIONAL CONFERENCE ON IMAGE PROCESSING (ICIP), IEEE, 17 September 2017 (2017-09-17), pages 1712 - 1716, XP033322867, DOI: 10.1109/ICIP.2017.8296574**
• **YICAN CHEN ET AL: "U-net CNN based fourier ptychography", ARXIV.ORG, CORNELL UNIVERSITY LIBRARY, 201 OLIN LIBRARY CORNELL UNIVERSITY ITHACA, NY 14853, 16 March 2020 (2020-03-16), XP081623060**

EP 4 290 449 B1

**Description**

**Domaine technique**

L'invention se rapporte au domaine du traitement d'images de microscopie, notamment dans le secteur de la biologie cellulaire.

L'invention présente un intérêt particulier mais nullement limitatif pour le traitement d'images à haute résolution, ou super-résolution, c'est-à-dire dont la résolution spatiale est typiquement à l'échelle de la centaine de nanomètres.

**État de la technique antérieure**

Plusieurs techniques de microscopie connues permettent d'imager des objets tels que des cellules biologiques. Les techniques connues présentent notamment les inconvénients mentionnés ci-après.

En microscopie classique, la détection à haute résolution pose des difficultés d'automatisation et pour le repérage et la caractérisation d'objets d'intérêt dans un spécimen.

La microscopie ptychographique de Fourier (FPM, pour « Fourier Ptychographic Microscopy » en anglais) permet d'améliorer les performances en matière de résolution et de champ pour une complexité du même ordre que la microscopie classique. L'obtention d'une image de qualité permettant la localisation et la caractérisation des objets est toutefois délicate : il devient indispensable de traiter les problèmes de netteté autour du réglage optimal, pour des objets d'intérêt tels que des inclusions cellulaires du type parasites dans un globule rouge ou encore de différents compartiments cellulaires dans un globule blanc. De plus, cette technique nécessite un réglage distinct pour chacune des modalités acquises, en particulier pour l'intensité et la phase, et pour chacun des canaux de couleur, c'est-à-dire dans le rouge, le vert ou le bleu.

L'holographie numérique permet quant à elle d'accéder à différents plans de focalisation, mais pour des niveaux de résolution insatisfaisants. Il est connu de réaliser une refocalisation numérique par apprentissage profond sur des images d'holographie bimodales, contenant à la fois des informations d'intensité et de phase. Néanmoins, cette technique ne permet pas de cibler des compartiments cellulaires d'intérêt ni de corriger des différences en intensité et en phase, en particulier pour chacun des canaux de couleur. De manière générale, l'utilisation de modèles d'intelligence artificielle est connue dans le domaine du traitement d'images de microscopie mais l'efficacité d'un traitement par réseau neuronal est tributaire de la qualité et de la diversité des images utilisées pour l'entraînement du modèle. Il en résulte des difficultés expérimentales et des coûts humains et de calculs importants.

Jinlei Zhang ET AL: "The integration of neural network and physical reconstruction model for Fourier ptychographic microscopy",OPTICS COMMUNICATIONS, ELSEVIER, AMSTERDAM, NL, vol. 504, 22 septembre 2021, XP086843721, divulgue l'apprentissage non supervisé au moyen d'un réseau de neurones non entraîné (FuNN) pour la reconstruction d'images de microscopie et décrit une image d'entrée synthétisée à partir d'images de faible résolution.

**Exposé de l'invention**

L'invention vise à procurer une solution permettant d'améliorer la qualité d'images de microscopie afin notamment de faciliter la compréhension et le suivi de processus biologiques en recherche et en clinique, ou encore pour permettre à des laboratoires d'analyse ou de surveillance épidémiologique de réaliser des diagnostics rapides et de haute sensibilité et spécificité.

Un but particulier de l'invention est de procurer une solution adaptée au traitement d'images acquises avec des microscopes conventionnels, notamment en champ clair, en champ sombre ou encore en fluorescence.

Un autre but de l'invention est de procurer une solution compatible avec l'acquisition d'images de spécimens biologiques qui peuvent être soit chimiquement marqués ou colorés soit dépourvus de colorant ou d'immuno-marqueur.

A cet effet, l'invention a pour objet un procédé de constitution d'une base de données d'apprentissage pour entraîner un réseau neuronal convolutif destiné à améliorer la qualité d'une image de microscopie, ce procédé comprenant les étapes suivantes :

- génération d'une première série d'images à partir d'une ou plusieurs images brutes d'une région d'un spécimen comprenant au moins un objet, les images de la première série étant générées à l'aide d'un algorithme de reconstruction de sorte que les images de la première série représentent ladite région du spécimen selon des plans respectifs éloignés les uns des autres le long d'une direction de référence,
- sélection d'une ou plusieurs images dans la première série pour former une ou plusieurs images de sortie,
- génération de jeux d'apprentissage formant la base de données d'apprentissage, chacun des jeux d'apprentissage comprenant :

  ○ une ou plusieurs images d'entrée formées par une ou plusieurs images respectives d'une deuxième série comportant des images de ladite région du spécimen, les images de la deuxième série représentant ladite région du spécimen selon des plans respectifs éloignés les uns des autres le long de ladite direction de référence,
  ○ la ou les images de sortie.

Il est ainsi proposé de générer de façon calculatoire une diversité d'images, ce qui permet de constituer la base de données d'apprentissage à partir d'un nombre restreint d'images brutes préalablement acquises.

La constitution de la base de données d'apprentissage nécessite une unique sélection de la ou des images de sortie, ce qui permet de réduire le temps humain et/ou de calcul correspondant.

Par ailleurs, la constitution de la base de données d'apprentissage peut être réalisée sur la base d'images brutes acquises selon diverses techniques de microscopie, incluant de manière non limitative la microscopie ptychographique de Fourier et l'holographie numérique, pour imager des objets contenus dans des spécimens biologiques qu'il n'est alors plus nécessaire de stocker.

Ladite première série d'images, qui sert au moins à constituer la ou les images de sortie utilisées dans la base de données d'apprentissage, permet de représenter ladite région du spécimen selon différents plans le long de la direction de référence, c'est-à-dire selon différentes positions du plan focal par rapport au spécimen.

La notion de qualité d'image est liée à la netteté, ou perceptibilité ou plus généralement à la possibilité de tirer une information d'un objet d'intérêt donné compte tenu de la position du plan focal objet du microscope par rapport au spécimen, sur une image reconstruite par calcul.

Chacun des jeux d'apprentissage peut donc comprendre plusieurs images d'entrée et plusieurs images de sortie.

Dans un mode de réalisation préféré, pour chacun des jeux d'apprentissage, les images d'entrée comprennent une première image d'entrée comprenant une information d'intensité et une deuxième image d'entrée comprenant une information de phase, ladite image de sortie comprenant une première image de sortie comprenant une information d'intensité et une deuxième image de sortie comprenant une information de phase.

Autrement dit, l'invention est de préférence mise en œuvre avec une imagerie bimodale, notamment en intensité et en phase.

De manière alternative ou complémentaire, pour chacun des jeux d'apprentissage, les images d'entrée peuvent comprendre des images qui correspondent chacune à un canal de couleur respectif et les images de sortie peuvent comprendre de manière analogue des images qui correspondent chacune à un canal de couleur respectif.

Bien entendu, un ou plusieurs des jeux d'apprentissage peuvent chacun comprendre des images d'entrée et de sortie comprenant des informations bimodales relatives à un unique canal de couleur ou comprenant à l'inverse une information unimodale, par exemple d'intensité ou de phase, pour plusieurs canaux de couleur. De nombreuses combinaisons peuvent être envisagées sans sortir du cadre de l'invention.

Dans un mode de réalisation, la deuxième série d'images comprend des images de la première série.

Cela permet d'augmenter la diversité des images d'entrée de la base de données d'apprentissage, sans augmenter le nombre d'acquisitions d'images brutes.

Bien entendu, la deuxième série d'images peut comprendre à la fois des images de la première série et d'autres images autrement acquises ou reconstruites par calcul.

Par exemple, la deuxième série peut comprendre des images générées à partir d'une ou plusieurs images brutes de ladite région du spécimen, les images de la deuxième série étant générées à l'aide d'un algorithme de reconstruction de sorte que les images de la deuxième série représentent ladite région du spécimen selon des plans respectifs éloignés les uns des autres le long d'une direction de référence.

Les images brutes utilisées pour générer les images de la première série peuvent comprendre les images brutes utilisées pour générer les images de la deuxième série. Notamment, les images brutes utilisées pour générer les images de la deuxième série peuvent être une partie des images brutes utilisées pour générer les images de la première série. Alternativement, les images brutes utilisées pour générer les images de la première série peuvent être différentes de celles utilisées pour générer les images de la deuxième série.

L'invention concerne aussi un procédé tel que décrit ci-dessus et comprenant en outre une étape d'acquisition desdites images brutes.

Selon une première variante, l'étape de sélection est réalisée par un opérateur humain.

La sélection de l'image utilisée comme image de sortie dans la base de données d'apprentissage par un opérateur humain permet de s'appuyer sur les compétences d'un expert en biologie afin d'identifier une image représentant le ou les objets d'intérêt de la manière la plus appropriée au sein d'une série d'images.

Selon une deuxième variante, l'étape de sélection est réalisée par un système informatique.

Ces variantes peuvent être combinées, par exemple et de manière non limitative en utilisant le système informatique pour opérer une présélection et en faisant intervenir l'opérateur humain pour sélectionner l'image de sortie au sein d'une série d'images ainsi présélectionnées dans la première série d'images.

L'invention a aussi pour objet un procédé d'entraînement d'un réseau neuronal convolutif destiné à améliorer la qualité d'une image de microscopie, en utilisant la base de données d'apprentissage constituée par un procédé tel que décrit ci-dessus.

L'entraînement est de préférence réalisé à l'aide d'un algorithme d'entraînement tel qu'un algorithme de rétropropagation du gradient de l'erreur.

L'invention a aussi pour objet un procédé de traitement d'une image de microscopie à l'aide d'un réseau neuronal convolutif entraîné avec un tel procédé.

L'invention permet ainsi de générer des données numériques de haute qualité, informatives, manipulables et ne nécessitant pas la conservation des spécimens biologiques.

Selon un autre aspect, l'invention a pour objet un dispositif configuré pour mettre en œuvre un procédé de constitution d'une base de données d'apprentissage tel que décrit ci-dessus.

Ce dispositif comprend de préférence une unité de traitement pour générer ladite première série d'images et les jeux d'apprentissage et pour exécuter l'algorithme de reconstruction.

Dans un mode de réalisation, en particulier lorsque le dispositif est destiné à permettre à un opérateur humain de réaliser l'étape de sélection, le dispositif comprend des moyens de sélection de la ou des images de sortie.

A titre d'exemple, ces moyens de sélection peuvent prendre la forme d'une interface de sélection et/ou de moyens de pointage.

Selon encore un autre aspect, l'invention a pour objet un programme d'ordinateur comprenant des instructions exécutables qui, lorsqu'elles sont exécutées par ordinateur, mettent en œuvre les étapes d'un procédé de constitution d'une base de données d'apprentissage tel que décrit ci-dessus, d'un procédé d'entraînement tel que décrit ci-dessus et/ou d'un procédé de traitement d'image tel que décrit ci-dessus.

L'invention permet d'obtenir de nombreux avantages par rapport à l'état de la technique antérieure, parmi lesquels :

- une amélioration de la robustesse en permettant notamment de réaliser une bonne correction d'image en intensité et/ou en phase sur une plage de réglage mécanique importante couvrant des plans focaux divers, tout en permettant de réduire les temps de calcul ;
- une amélioration de la sensibilité de détection sans dégradation de la spécificité ;
- une diminution de la densité d'erreurs dans des zones hors focus ;
- une diminution de la densité d'erreurs dans la zone nette de focus ;
- une compatibilité avec l'utilisation de lames noncolorées ou marquées chimiquement et avec des scanners de lames et microscopes traditionnels ;
- une possibilité de réduire la complexité mécanique des microscopes ;
- un gain médico-économique, propre à favoriser une médecine personnalisée.

D'autres avantages et caractéristiques de l'invention apparaîtront à la lecture de la description détaillée, non limitative, qui suit.

**Brève description des dessins**

La description détaillée qui suit fait référence aux dessins annexés sur lesquels :

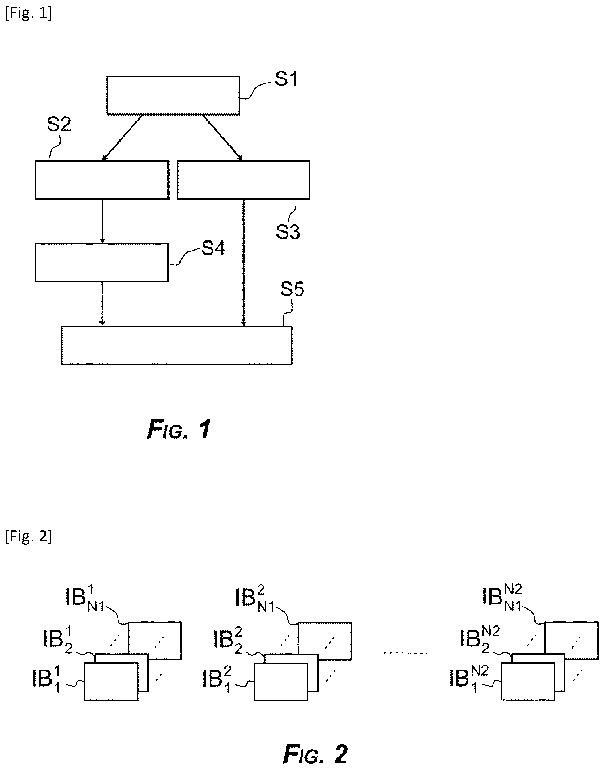

- [Fig. 1] représente de manière schématique un procédé de constitution d'une base de données d'apprentissage conforme à un mode de réalisation non limitatif de l'invention, ce procédé comprenant une étape d'acquisition d'images brutes par microscopie en transmission, une étape de génération d'une première série d'images à partir d'images brutes ainsi acquises, une étape de sélection d'images de référence parmi les images de la première série, une étape de génération d'une deuxième série d'images à partir desdites images brutes et une étape de constitution de la base de données d'apprentissage en utilisant les images de référence et les images de la deuxième série ;

- [Fig. 2] illustre l'étape d'acquisition d'images brutes du procédé de la figure 1;

- [Fig. 3] illustre l'étape de génération de la première série d'images du procédé de la figure 1 ;

- [Fig. 4] illustre l'étape de sélection d'images de référence du procédé de la figure 1;

- [Fig. 5] illustre l'étape de génération de la deuxième série d'images du procédé de la figure 1.

**Description détaillée de modes de réalisation**

La figure 1 illustre des étapes S1-S5 d'un procédé permettant de constituer une base de données d'apprentissage d'un réseau neuronal convolutif conformément à l'invention.

De manière générale, ce procédé comprend une étape S1 d'acquisition d'images brutes, une étape S2 de génération d'une première série d'images, une étape S3 de génération d'une deuxième série d'images, une étape S4 de sélection d'images et une étape S5 de constitution de la base de données d'apprentissage.

Dans cet exemple, les images brutes sont acquises à l'étape S1 à l'aide d'un microscope équipé d'une source de lumière comportant une matrice de $N1 = 9$ diodes électroluminescentes et d'une caméra permettant d'acquérir des images de 3584 x 2688 pixels.

Le document suivant décrit un exemple d'acquisition avec source de lumière matricielle pouvant être utilisée dans le cadre de l'invention : « Konda et al., Fourier ptychography: current applications and future promises, Vol. 28, No. 7, 30 March 2020, Optics Express ».

L'imagerie est réalisée sur un spécimen biologique comprenant dans cet exemple des cellules sanguines formant des objets d'intérêt.

De manière classique, le spécimen est disposé sur une lame sous forme de couche dont l'épaisseur s'étend le long d'une direction Z, appelée « direction de référence » dans le présent document.

Un réglage manuel ou automatique du plan de focalisation est tout d'abord réalisé en positionnant le plan focal à une position choisie du spécimen selon la direction Z, de manière à obtenir une image relativement nette d'une région du spécimen comprenant au moins un objet d'intérêt, cette région étant située dans une zone centrale du champ de vue. Par convention, le focus de référence ainsi obtenu correspond à une position z = 0 du plan focal par rapport au spécimen selon la direction Z.

Les images brutes du spécimen sont acquises à l'étape S1 en modifiant la position relative du plan focal par rapport au spécimen selon la direction Z, de z = -6 $\mu$m à z = +6 $\mu$m par pas de 2 $\mu$m, soit un nombre de N2 = 7 positions de plan focal.

En référence à la figure 2, pour chacune de ces N2 positions du plan focal, une pile de N1 images brutes $IB_{i=1:N1}$ est acquise.

Dans cet exemple, chacune des images brutes $IB_{i=1:N1}^{j=1:N2}$ ainsi acquises est prétraitée de manière à conserver uniquement une région centrale du champ de vue de dimension 256 x 256 pixels.

Dans cet exemple, lesdites première et deuxième séries d'images sont générées à partir des images brutes prétraitées selon une technique de reconstruction ptychographique, à l'aide d'un algorithme de reconstruction du type « PIE » (de l'anglais « Ptychographic Iterative Engine »). Ce type d'algorithme est bien connu en soi dans le secteur de la microscopie en transmission. Les principes généraux d'un tel algorithme sont par exemple décrits dans le document suivant : « Maiden et al., An improved ptychographical phase retrieval algorithm, Ultramicroscopy 109, 2009, 1256-1262 ».

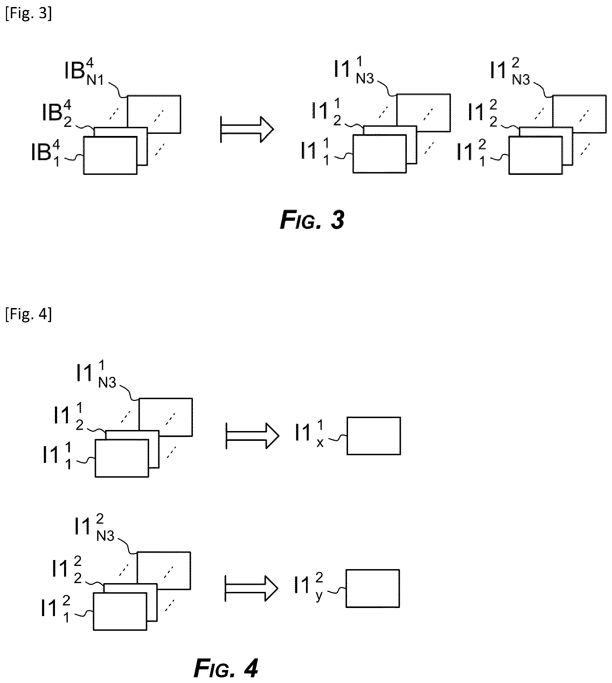

Concernant l'étape S2 (voir figures 1 et 3), à partir de la pile d'images brutes prétraitées $IB_{i=1:N1}^{4}$ correspondant à la position de référence du plan focal, c'est-à-dire z = 0, il est généré une première série d'images $I1_{i=1:N3}^{1,2}$ en utilisant un algorithme de reconstruction et de changement de focus. Dans cet exemple, l'algorithme utilisé, dénommé « EPRY », est décrit dans le document suivant : « Ou et al., Embedded pupil function recovery for Fourier ptychographic microscopy, Optical Society of America, 2014, DOI:10.1364/OE.22.004960 ». La position calculée du plan focal varie dans cet exemple de z = -3 $\mu$m à z = +3 $\mu$m par pas de 0,1 $\mu$m, correspondant à N3 = 60 images générées. Les images $I1_{i=1:N3}^{1,2}$ de la première série ont dans cet exemple une taille de 512 x 512 pixels.

Pour chacune de ces positions de plan focal, l'algorithme est dans cet exemple configuré pour générer une première image $I1_{i=1:N3}^{1}$ comprenant une information d'intensité et une deuxième image $I1_{i=1:N3}^{2}$ comprenant une information de phase. Autrement dit, la première série d'images $I1_{i=1:N3}^{1,2}$ comprend une première sous-série d'images d'intensité $I1_{i=1:N3}^{1}$ et une deuxième sous-série d'images de phase $I1_{i=1:N3}^{2}$.

Les images de chacune de ces sous-séries représentent ainsi ladite région du spécimen et ainsi l'au moins un objet d'intérêt qu'elle contient selon des plans respectifs éloignés les uns des autres le long de la direction Z, cela de manière plus ou moins nette, informative ou du moins exploitable par un expert biologique, étant entendu que, pour chacune de ces sous-séries, l'image la plus exploitable ou utile pour un expert biologique ne correspond pas nécessairement à l'image associée à une position du plan focal de z = 0.

Dans cet exemple, en référence aux figures 1 et 4, l'étape S4 de sélection est réalisée par un expert en biologie qui sélectionne l'une des images d'intensité $I1_{x}^{1}$ et l'une des images de phase $I1_{y}^{2}$ au sein de la première série d'images $I1_{i=1:N3}^{1,2}$. Dans la présente description, les images d'intensité $I1_{x}^{1}$ et de phase $I1_{y}^{2}$ ainsi sélectionnées sont respectivement appelées « première image de sortie » et « deuxième image de sortie » car elles seront utilisées pour constituer des images de sortie de la base de données d'apprentissage (voir plus loin ci-dessous).

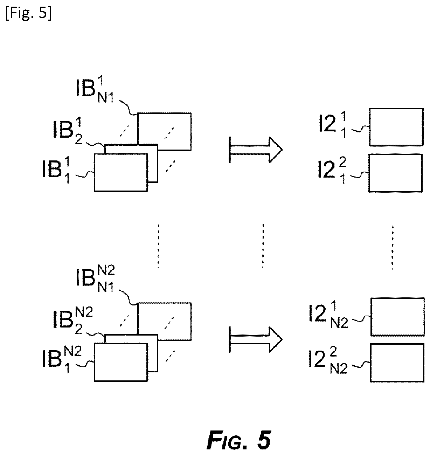

Concernant l'étape S3 (voir figures 1 et 5), à partir des N2 piles d'images brutes prétraitées, il est dans cet exemple généré une deuxième série d'images $I2_{i=1:N2}^{1,2}$ en utilisant l'algorithme EPRY précité. Bien entendu, un autre algorithme de reconstruction peut être utilisé. Les images $I2_{i=1:N2}^{1,2}$ de cette deuxième série ont dans cet exemple une taille de 512 x 512 pixels.

De manière analogue à la reconstruction de la première série d'images, l'algorithme est dans cet exemple configuré pour générer, pour chacune des N2 positions du plan focal, une première image $I2_{i=1:N2}^{1}$ comprenant une information d'intensité et une deuxième image $I2_{i=1:N2}^{2}$ comprenant une information de phase. Autrement dit, la deuxième série d'images $I2_{i=1:N2}^{1,2}$ comprend elle aussi une première sous-série d'images d'intensité $I2_{i=1:N2}^{1}$ et une deuxième sous-série d'images de phase $I2_{i=1:N2}^{2}$.

Ainsi, les images de chacune des sous-séries de la deuxième série représentent ladite région du spécimen et ainsi l'au moins un objet d'intérêt qu'elle contient selon des plans respectifs éloignés les uns des autres le long de la direction Z, cela de manière plus ou moins nette, informative ou du moins exploitable par un expert biologique, étant entendu que, pour chacune de ces sous-séries, l'image la plus exploitable ou utile pour un expert biologique ne correspond pas nécessairement à l'image associée à une position du plan focal de z = 0.

Dans cet exemple, les images $I2^{1,2}_{i=1:N2}$ de la deuxième série sont utilisées pour constituer des images d'entrée de la base de données d'apprentissage.

Plus précisément, l'étape S5 de constitution de la base de données d'apprentissage comprend une constitution de plusieurs jeux d'apprentissage qui comprennent chacun une première image d'entrée formée par l'une respective desdites premières images $I2^{1}_{i}$ de la deuxième série, une deuxième image d'entrée formée par l'une respective desdites deuxièmes images $I2^{2}_{i}$ de la deuxième série, ladite première image de sortie $I1^{1}_{x}$ et ladite deuxième image de sortie $I1^{2}_{y}$.

Dans ce mode de réalisation, le réseau neuronal convolutif mis en œuvre est un modèle connu sous la dénomination « U-NET ». De manière connue en soi, ce modèle présente une architecture comprenant d'une part un encodeur doté d'un assemblage de couches de convolution et de couches connues sous la dénomination anglo-saxonne « max-pooling » et, d'autre part, un décodeur doté d'un assemblage de couches de convolution et de couches de sur-échantillonnage connues sous la dénomination anglo-saxonne « upsampling / transposed convolution ». L'encodeur et le décodeur sont reliées par de éléments connues sous la dénomination anglo-saxonne « skip connections ». Le document suivant décrit un tel modèle : « Ronneberger et al., U-net: Convolutional networks for biomedical image segmentation, In International Conference on Medical image computing and computer-assisted intervention, pp. 234-241, Springer, Cham, 2015 ».

Le réseau neuronal est entraîné avec la base de données d'apprentissage constituée de la manière décrite ci-dessus, à l'aide d'un algorithme d'entraînement, en l'occurrence un algorithme de rétropropagation du gradient de l'erreur.

Dans une variante de réalisation, l'entraînement est réalisé avec une base de données d'apprentissage comprenant à la fois les jeux décrits ci-dessus, c'est-à-dire des jeux dans lesquels les images d'entrée sont des images de la deuxième série, et comprenant en outre des jeux dans lesquels les images d'entrée sont des images de la première série.

D'autres variantes peuvent être mises en œuvre dans le cadre de l'invention pour former la base de données d'apprentissage. Par exemple, les images d'entrée des jeux d'apprentissage peuvent comprendre uniquement des images de la première série. Autrement dit, ladite deuxième série peut ne pas être générée de la manière décrite ci-dessus mais être simplement constituée à partir des images de la première série.

Un réseau neuronal entraîné avec une telle base de données permet de reconstruire une imagerie bimodale, en intensité et en phase, en améliorant la qualité d'images de microscopie par modification de la position du plan focal de manière sélective pour différents objets d'intérêt.

Un réseau neuronal ainsi entraîné permet notamment d'obtenir une image ayant plusieurs objets d'intérêt qui apparaissent de manière nette sur la base d'une image de microscopie sur laquelle tout ou partie de ces objets apparaissent flous, y compris lorsque deux desdits objets d'intérêt sont superposés selon la direction de référence.

Les exemples qui précèdent visent à illustrer le principe de l'invention qui peut être mis en œuvre de manière différente et/ou en combinant des caractéristiques et variantes ici décrites. Par exemple, avant acquisition des images brutes, il peut être réalisé un pré-repérage automatisé d'un ou plusieurs objets d'intérêt.

Dans une variante de réalisation, la sélection des images de sortie peut être réalisée de manière automatique par un système informatique, ou à la fois avec un tel système informatique configuré par exemple de manière à présélectionner certaines images et ensuite par un opérateur humain réalisant la sélection sur la base des images ainsi présélectionnées.

Dans une variante, les images d'entrée de la base de données d'apprentissage, ou certaines d'entre elles, sont des parties respectives d'images reconstruites sur la base des images brutes, qu'il s'agisse par exemple de parties d'images de la première série et/ou de la deuxième série, dont la taille peut être de 128 x 128 pixels.

Bien entendu, l'invention décrite ci-dessus peut être mise en œuvre de manière analogue non pas sur une imagerie bimodale mais sur une imagerie monomodale, par exemple soit en intensité soit en phase, c'est-à-dire notamment en utilisant une unique image d'entrée et une unique image de sortie dans chacun des jeux d'apprentissage et/ou lors de la phase d'inférence. De manière analogue, l'entraînement peut être réalisé en utilisant plusieurs images d'entrée et de sortie monomodales ou bimodales qui correspondent chacune à un canal de couleur respectif.

## Revendications

1. Procédé de constitution d'une base de données d'apprentissage pour entraîner un réseau neuronal convolutif destiné à améliorer la qualité d'une image de microscopie, ce procédé comprenant les étapes suivantes :

   - génération (S2) d'une première série d'images ($I1^{1,2}_{i=1:N3}$) à partir d'une ou plusieurs images brutes ( $IB_{i=1:N1}^{j=1:N2}$ ) d'une région d'un spécimen comprenant au moins un objet, les images de la première série étant générées à l'aide d'un algorithme de reconstruction de sorte que les images de la première série représentent ladite région du spécimen selon des plans respectifs éloignés les uns des autres le long d'une direction de référence,

- sélection (S4) d'une ou plusieurs images ( $I1_x^1$, $I1_y^2$ ) dans la première série pour former une ou plusieurs images de sortie,

- génération (S5) de jeux d'apprentissage formant la base de données d'apprentissage, chacun des jeux d'apprentissage comprenant :

  ○ une ou plusieurs images d'entrée ( $I2_i^{1,2}$ ) formées par une ou plusieurs images respectives d'une deuxième série ( $I2_{i=1:N2}^{1,2}$ ) comportant des images de ladite région du spécimen, les images de la deuxième série représentant ladite région du spécimen selon des plans respectifs éloignés les uns des autres le long de ladite direction de référence,

  ○ la ou les images de sortie ( $I1_x^1$, $I1_y^2$ ).

2. Procédé selon la revendication 1, dans lequel, pour chacun des jeux d'apprentissage, les images d'entrée ( $I2_i^{1,2}$ ) comprennent une première image d'entrée ( $I2_i^1$ ) comprenant une information d'intensité et une deuxième image d'entrée ( $I2_i^2$ ) comprenant une information de phase, les images de sortie comprenant une première image de sortie ( $I1_x^1$ ) comprenant une information d'intensité et une deuxième image de sortie ( $I1_y^2$ ) comprenant une information de phase.

3. Procédé selon la revendication 1 ou 2, dans lequel la deuxième série d'images comprend des images de la première série.

4. Procédé selon l'une quelconque des revendications 1 à 3, dans lequel la deuxième série ( $I2_{i=1:N2}^{1,2}$ ) comprend des images générées à partir d'une ou plusieurs images brutes ( $IB_{i=1:N1}^{j=1:N2}$ ) de ladite région du spécimen, les images de la deuxième série ( $I2_{i=1:N2}^{1,2}$ ) étant générées (S3) à l'aide d'un algorithme de reconstruction de sorte que les images de la deuxième série ( $I2_{i=1:N2}^{1,2}$ ) représentent ladite région du spécimen selon des plans respectifs éloignés les uns des autres le long d'une direction de référence.

5. Procédé selon l'une quelconque des revendications 1 à 5, comprenant une étape d'acquisition (S1) desdites images brutes ( $IB_{i=1:N1}^{j=1:N2}$ ).

6. Procédé selon l'une quelconque des revendications 1 à 5, dans lequel l'étape de sélection (S4) est réalisée par un opérateur humain et/ou par un système informatique.

7. Procédé d'entraînement d'un réseau neuronal convolutif destiné à améliorer la qualité d'une image de microscopie, en utilisant la base de données d'apprentissage constituée par un procédé selon l'une quelconque des revendications 1 à 6, à l'aide d'un algorithme d'entraînement qui est de préférence un algorithme de rétropropagation du gradient de l'erreur.

8. Procédé de traitement d'une image de microscopie à l'aide d'un réseau neuronal convolutif entraîné avec un procédé selon la revendication 7.

9. Dispositif configuré pour mettre en œuvre un procédé selon l'une quelconque des revendications 1 à 6, comprenant une unité de traitement pour générer ladite première série d'images ( $I1_{i=1:N3}^{1,2}$ ) et les jeux d'apprentissage et pour exécuter l'algorithme de reconstruction, et des moyens de sélection de la ou des images de sortie.

10. Programme d'ordinateur comprenant des instructions exécutables qui, lorsqu'elles sont exécutées par ordinateur, mettent en œuvre les étapes d'un procédé de constitution d'une base de données d'apprentissage selon l'une quelconque des revendications 1 à 4, d'un procédé d'entraînement selon la revendication 7 et/ou d'un procédé de traitement selon la revendication 8.

**Patentansprüche**

1. Verfahren zum Erstellen einer Trainingsdatenbank zum Trainieren eines neuronalen Faltungsnetzes, das die Qualität eines Mikroskopbildes verbessern soll, wobei dieses Verfahren die folgenden Schritte umfasst:

   - Generieren (S2) einer ersten Bilderserie ( $I1_{i=1:N3}^{1,2}$ ) aus einem oder mehreren Rohbil-

dern ( $IB_{i=1:N1}^{j=1:N2}$ ) von einer Region eines Exemplars, das mindestens ein Objekt umfasst, wobei die Bilder der ersten Serie mittels eines Rekonstruktionsalgorithmus so generiert werden, dass die Bilder der ersten Serie die Region des Exemplars gemäß jeweils voneinander beabstandeten Ebenen entlang einer Referenzrichtung darstellen,

- Auswählen (S4) eines Bildes oder mehrerer Bilder ( $I1_x^1$, $I1_y^2$ ) in der ersten Serie, um ein oder mehrere Ausgabebilder zu bilden,
- Generieren (S5) von Trainingsdatensätzen, welche die Trainingsdatenbank bilden, wobei jeder der Trainingsdatensätze umfasst:

  o ein oder mehrere Eingabebilder ( $I2_i^{1,2}$ ) , die aus einem oder mehreren jeweiligen Bildern einer zweiten Serie ( $I2_{i=1:N2}^{1,2}$ ), die Bilder der Region des Exemplars umfasst, gebildet sind, wobei die Bilder der zweiten Serie die Region des Exemplars gemäß jeweils voneinander beabstandeten Ebenen entlang der Bezugsrichtung darstellen,

  o das/die Ausgabebild(er) ( $I1_x^1$, $I1_y^2$ ).

2. Verfahren nach Anspruch 1, wobei für jeden der Trainingsdatensätze die Eingabebilder ( $I2_i^{1,2}$ ) ein erstes Eingabebild ( $I2_i^1$ ) einschließlich Intensitätsinformationen umfassen, und ein zweites Eingabebild ( $I2_i^2$ ) einschließlich Phaseninformationen umfassen, wobei die Ausgabebilder ein erstes Ausgabebild ( $I1_x^1$ ) einschließlich Intensitätsinformationen umfassen, und ein zweites Ausgabebild ( $I1_y^2$ ) einschließlich Phaseninformationen umfassen.

3. Verfahren nach Anspruch 1 oder 2, wobei die zweite Bildserie Bilder aus der ersten Serie umfasst.

4. Verfahren nach einem der Ansprüche 1 bis 3, wobei die zweite Serie ( $I2_{i=1:N2}^{1,2}$ ) Bilder umfasst, die aus einem oder mehreren Rohbildern ( $IB_{i=1:N1}^{j=1:N2}$ ) der Region des Exemplars generiert werden, wobei die Bilder der zweiten Serie ( $I2_{i=1:N2}^{1,2}$ ) mittels eines Rekonstruktionsalgorithmus so generiert werden (S3), dass die Bilder der zweiten Serie ( $I2_{i=1:N2}^{1,2}$ ) die Region des Exemplars gemäß jeweils voneinander entfernten Ebenen entlang einer Referenzrichtung darstellen.

5. Verfahren nach einem der Ansprüche 1 bis 5, umfassend einen Schritt der Erfassung (SI) der Rohbilder ( $IB_{i=1:N1}^{j=1:N2}$ ).

6. Verfahren nach einem der Ansprüche 1 bis 5, wobei der Schritt des Auswählens (S4) von einem menschlichen Bediener und/oder von einem Computersystem durchgeführt wird.

7. Verfahren zum Trainieren eines neuronalen Faltungsnetzes, das zur Verbesserung der Qualität eines Mikroskopbildes unter Verwendung der Trainingsdatenbank, die durch ein Verfahren nach einem der Ansprüche 1 bis 6 erstellt wurde, bestimmt ist, wobei es sich bei dem Trainingsalgorithmus vorzugsweise um einen Backpropagation-Algorithmus des Fehlergradienten handelt.

8. Verfahren zur Verarbeitung eines Mikroskopbildes unter Verwendung eines neuronalen Faltungsnetzes, das mit einem Verfahren nach Anspruch 7 trainiert wurde.

9. Vorrichtung, die zum Implementieren eines Verfahrens nach einem der Ansprüche 1 bis 6 konfiguriert ist, umfassend eine Verarbeitungseinheit zum Generieren der ersten Bilderserie ( $I1_{i=1:N3}^{1,2}$ ) und der Trainingsdatensätze und zum Ausführen des Rekonstruktionsalgorithmus, sowie Mittel zur Auswahl des/der Ausgabebildes/-bilder.

10. Computerprogramm, umfassend ausführbare Anweisungen, die, wenn sie von einem Computer ausgeführt werden, die Schritte eines Verfahrens zum Erstellen einer Trainingsdatenbank nach einem der Ansprüche 1 bis 4, eines Trainingsverfahrens nach Anspruch 7 und/oder eines Verarbeitungsverfahrens nach Anspruch 8 implementieren.

**Claims**

1. A method for constituting a training database to train a convolutional neural network intended to improve the quality of a microscopy image, said method comprising the following steps:

   - generating (S2) a first set of images ( $I1_{i=1:N3}^{1,2}$ ) from one or more raw images ( $IB_{i=1:N1}^{j=1:N2}$ ) of a region of a specimen comprising at least one object, the images of the first set being generated using a reconstruction algorithm such that the images of the first set represent said region of the specimen in respective planes distant from each other along a reference direction,
- selecting (S4) one or more images ( $I1_x^1, I1_y^2$ ) in the first set to form one or more output images,
- generation (S5) of training sets forming the training database, each of the training sets comprising:

  ◦ one or more input images ( $I2_i^{1,2}$ ) formed by one or more respective images of a second set ( $I2_{i=1:N2}^{1,2}$ ) comprising images of said region of the specimen, the images of the second set representing said region of the specimen in respective planes distant from each other along said direction of reference,
  ◦ the output image(s) ( $I1_x^1, I1_y^2$ ).

2. The method of claim 1, wherein, for each of the training sets, the input images ( $I2_i^{1,2}$ ) comprise a first input image ( $I2_i^1$ ) comprising intensity information and a second input image ( $I2_i^2$ ) comprising phase information, the output images comprising a first output image ( $I1_x^1$ ) comprising intensity information and a second output image ( $I1_y^2$ ) comprising phase information.

3. A method according to claim 1 or 2, wherein the second set of images comprises images of the first set.

4. A method according to any one of claims 1 to 3, wherein the second set ( $I2_{i=1:N2}^{1,2}$ ) comprises images generated from one or more raw images ( $IB_{i=1:N1}^{j=1:N2}$ ) of said region of the specimen, wherein the images of the second set ( $I2_{i=1:N2}^{1,2}$ ) are generated (S3) using a reconstruction algorithm such that the images of the second set ( $I2_{i=1:N2}^{1,2}$ ) represent said region of the specimen in respective planes distant from each other along a reference direction.

5. A method according to any one of claims 1 to 5, comprising a step for acquiring (S1) said raw images ( $IB_{i=1:N1}^{j=1:N2}$ ).

6. A method according to any one of claims 1 to 5, wherein the selection step (S4) is performed by a human operator and/or by a computer system.

7. A method for training a convolutional neural network intended to improve the quality of a microscopy image, using the training database constituted by a method according to any one of claims 1 to 6, using a training algorithm which is preferably an error gradient backpropagation algorithm.

8. A method for processing a microscopy image using a convolutional neural network trained with a method according to claim 7.

9. A device configured to carry out a method according to any one of claims 1 to 6, comprising a processing unit for generating said first set of images ( $I1_{i=1:N3}^{1,2}$ ) and the training sets and for executing the reconstruction algorithm, and means for selecting the output image(s).

10. A computer program comprising executable instructions which, when executed by computer, carry out the steps of a method for constituting a training database according to any one of claims 1 to 4, a training method according to claim 7 and/or a processing method according to claim 8.

[Fig. 1]

FIG. 1

[Fig. 2]

FIG. 2

[Fig. 3]

$$\text{F\small{IG}.}\ 3$$

[Fig. 4]

$$\text{F\small{IG}.}\ 4$$

[Fig. 5]

$$IB_{N1}^{1}$$

$$IB_{2}^{1}$$

$$IB_{1}^{1}$$

$$I2_{1}^{1}$$

$$I2_{1}^{2}$$

$$IB_{N1}^{N2}$$

$$IB_{2}^{N2}$$

$$IB_{1}^{N2}$$

$$I2_{N2}^{1}$$

$$I2_{N2}^{2}$$

FIG. 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- The integration of neural network and physical reconstruction model for Fourier ptychographic microscopy. **JINLEI ZHANG et al.** OPTICS COMMUNICATIONS. ELSEVIER, 22 September 2021, vol. 504
- **KONDA et al.** Fourier ptychography: current applications and future promises. *Optics Express*, 30 March 2020, vol. 28
- **MAIDEN et al.** An improved ptychographical phase retrieval algorithm. *Ultramicroscopy*, 2009, vol. 109, 1256-1262
- **OU et al.** Embedded pupil function recovery for Fourier ptychographic microscopy. *Optical Society of America*, 2014
- U-net: Convolutional networks for biomedical image segmentation. **RONNEBERGER et al.** In International Conference on Medical image computing and computer-assisted intervention. Springer, 2015, 234-241